# EUROPEAN PATENT APPLICATION

(11) **EP 1 592 279 A1**
(43) Date of publication of application: **02.11.2005**
(21) Application number: 05103536.8
(22) Date of filing: 28.04.2005
(51) Int. Cl.: H04Q 7/38

(54) **MOBILE COMMUNICATION METHODS, SYSTEMS AND APPARATUS FOR USE THEREIN**

(30) Priority: 29.04.2004 GB 0409518
(71) Applicant: MOTOROLA, INC., Schaumburg, IL 60196 (US)
(72) Inventor: Jakobsen, Ken, DK-2600, Glostrup (DK)
(74) Representative: McCormack, Derek James

(57) **Abstract**

A method for sharing access to a resource such as a data communication channel in a mobile communication system by a plurality of mobile stations in the system, comprising the steps of:
(a) providing the mobile stations with access opportunities to access the resource;
(b) broadcasting by a base transmitter of the system to the mobile stations a probability factor for each of the opportunities;
(c) measuring by each of the mobile stations an apparent distance of the mobile station from a reference location in the system; and
(d) calculating by each of the mobile stations a probability for selecting an access opportunity using the broadcast probability factor received by the mobile station and the measurement made by the mobile station.

Also disclosed are a system, system infrastructure apparatus and mobile station which operate using the method.

## Description

### FIELD OF THE INVENTION

The present invention relates to mobile communication methods, systems and apparatus, particularly infrastructure apparatus and mobile stations, for use therein.

### BACKGROUND OF THE INVENTION

Mobile wireless communication systems, for example cellular telephony or private mobile radio communication systems, typically provide for radio telecommunication links to be arranged between a system infrastructure including a plurality of base transceiver stations (BTSs) and a plurality of user or subscriber units or terminals, often termed mobile stations (MSs).

Methods for communicating information simultaneously in a wireless communication network exist where communication resources are shared by a number of users. Such methods are termed multiple access techniques. A number of multiple access techniques exist, whereby a finite communication resource is divided into any number of physical parameters. Of particular interest herein is TDMA (time division multiple access), a procedure whereby each communication resource, say a communication channel on a particular frequency used in the communication system, is shared amongst users by dividing the resource into a number of distinct time periods (time-slots, frames, etc).

Within such multiple access techniques, different duplex (two-way communication) paths are arranged. Such paths can be arranged in a frequency division duplex (FDD) configuration, whereby a frequency is dedicated for up-link communication, i.e. from a MS toits serving BTS, and a second frequency is dedicated for downlink communication, i.e. from a serving BTS to one or more MSs. Alternatively, the paths can be arranged in a time division duplex (TDD) configuration, whereby a first time period is dedicated for up-link communication and a second time period is dedicated for downlink communication.

An example of a zone/cell-based wireless communication system is a TETRA (TErrestrial Trunked Radio) system, which is a system operating according to TETRA standards or protocols as defined by the European Telecommunications Standards Institute (ETSI). A primary focus for TETRA equipment is use by professional radio users such as the emergency services, as TETRA provides dispatch and control services. The system infrastructure in a TETRA system is generally referred to as a switching and management infrastructure (SwMI), which contains substantially all of the communication elements apart from the MSs. This includes base transceiver stations (BTSs) connected to a conventional public-switched telephone network (PSTN) through base station controllers (BSCs) and mobile switching centres (MSCs).

The communication network may provide radio communications between the infrastructure and MSs (or between MSs via the infrastructure) of information in any of the known forms in which such communications are possible. In particular, information may represent speech, sound, data, picture or video information. Data information is usually digital information representing written words, numbers etc, i.e. the type of user information processed in a personal computer, often referred to in relation to communication in a network as 'text' information or 'packet data'. In addition, control signalling messages are communicated. These are messages relating to the communication system itself, e.g. to control the manner in which user information is communicated in compliance with the selected industry protocol such as TETRA. Different channels may be used for communication of the different forms of information.

In TETRA systems and in some other cellular systems, when a user needs to request access to a resource of the system, for example to access a channel to transmit packet data, this request is done using a method known as 'Random Access Procedure' (RAP). The method is also known as Reservation ALOHA. In this procedure, the user's MS sends a request message to the infrastructure indicating the resource, e.g. capacity in a particular communication channel such as for packet data communication, to which access is required. The infrastructure may grant the request in whole or in part by reserving all or some of the capacity requested.

TETRA systems use TDMA operating protocols. In such protocols, some slots in the timing procedure of the control signalling channel may be reserved for the RAP requests or such slots may be allocated by the system infrastructure on a dynamic basis. The infrastructure informs the MSs of users through its downlink transmission that the next say N slots are to be devoted to the RAP. These slots are available for the MSs which require access to a system resource to have opportunities to request the infrastructure to allow or reserve access to the resource. Such a MS uses a Random Access (RA) opportunity in one of the designated slots to make a RAP request. If the request is successful, the infrastructure will reserve or grant access to the appropriate resource to the MS. These RA opportunities are available to all legitimate MSs operating within a given cell. This may include, for example, all MSs within the cell or all MSs in a given user class within the cell as specified by the infrastructure. Collisions may occur in the sending of requests. When this happens, each MS concerned will not receive any feedback from the infrastructure as to the success of its request and may need to try, after some delay, to repeat the request procedure.

The amount of data needed for a reservation request through a RAP is relatively small (compared with a typical amount of user data sent when a channel becomes available). The MS merely sends a message to the infrastructure including its required capacity requested (say x slots), probably the urgency of the need and not much more. As a result, it is not essential to use a whole time slot for each RAP opportunity in TETRA and some other TDMA based cellular systems. For example, slots may be divided into multiple sub-slots, e.g. two, three or four equal parts, to provide the RA request opportunities. When the infrastructure informs MSs that a particular forthcoming slot may be used for RA requests, the MSs may select any of these sub-slots, in a random fashion, to send their requests for resource access. This lowers the probability of collision by effectively multiplying the number of opportunities which can be made available in a given period of time, e.g. by doubling the number of opportunities where slots are divided into half slots.

In a wide band system such as one suitable for providing TEDS (TETRA Enhanced Data Services) being proposed for TETRA Release 2 standard, a signalling channel having a wide frequency bandwidth may be divided into a number of narrower channels. When a TDMA procedure is used in these divided channel systems, some slots in the TDMA timing frame can be devoted to RA opportunities as noted earlier. Since the main channel has a wide bandwidth and the amount of information to be sent is small, it has been proposed (see for example TIA STANDARD, Wideband Air Interface Scalable Adaptive Modulation (SAM), Physical Layer Specification Public Safety Wideband Data, Standards Project, Digital Radio Technical Standards, TIA-902.BAAB), to use the narrower channels obtained by dividing the main wide channel for the RA opportunities. The MS making a RA request would randomly choose one of the narrower channels.

For example, TIA-902.BAAB referenced above proposes that, when using 150 KHz wide channels, RA requests should be made using three 50 KHz bandwidths within the channels, instead of the full 150 KHz width available in the channels.

By dividing the main channel into three narrower channels of 50 KHz bandwidth in this way, and by having RA opportunities in each of the two half slots making up an entire slot of the TDMA timing structure, the number of opportunities for RA is increased. Using the complete 150 KHz bandwidth available with time slots divided into half slots results in two RA opportunities per slot. Dividing the 150 KHz wide channel into three narrower channels results in three RA opportunities per half slot and six RA opportunities per slot.

One of the problems of this approach is that the narrower divided channels are closely spaced. In a cellular system, adjacent frequency channels are not used in the same cell, in order to avoid the problem of a MS in an adjacent channel close to the BTS masking the reception in the main channel of a MS far from the BTS. This is known in the art as a 'near-far' problem.

In the operating protocol defined in the TETRA standard, it is stipulated that subscriber MSs transmitting in a RA sub-slot (e.g. half slot), should use the maximum power allowed for its class. However, in the frequency divided procedure proposed for the RAP as described earlier, if a MS near to the BTS uses the middle of three adjacent narrow channels for its RA request, most probably any transmission coming from a MS far from the BTS in either of the upper or lower narrow channels will suffer significant interference from the RA request signal sent by that MS.

### SUMMARY OF THE PRESENT INVENTION

According to the present invention in a first aspect there is provided a method for sharing access to a resource in a mobile communication system by a plurality of mobile stations in the system, comprising the steps of:
(a) providing the mobile stations with access opportunities to access the resource;
(b) broadcasting by a base transmitter of the system to the mobile stations a probability factor for each of the opportunities;
(c) measuring by each of the mobile stations an apparent distance of the mobile station from a reference location in the system; and
(d) calculating by each of the mobile stations a probability for selecting an access opportunity using the broadcast probability factor received by the mobile station and the measurement made by the mobile station.

The probability factor may be a number recognised by the mobile stations indicating how likely a mobile station is to choose the defined opportunity based on a measured value of apparent distance of the mobile station from a reference location. For example, for some opportunities in the set of opportunities available, the probability value indicated may be low for those mobile stations having a low apparent measured distance value and high for those mobile stations having a high apparent measured distance value. For other opportunities in the set of opportunities available, the probability value indicated may in contrast be high for those mobile stations having a low apparent measured distance value and low for those mobile stations having a high apparent measured distance value.

The overall purpose of using the broadcast probability factor for each access opportunity in this way is to offset or distort the randomisation of the access by all mobile stations so that certain opportunities favour mobile stations apparently near to the reference location and certain other opportunities favour mobile stations apparently far from the reference location. The overall effect is to make the overall probability of mobile stations accessing the system resource greater across the spread of mobile stations irrespective of the location of the mobile stations.

The mobile stations to which the probability factor is broadcast and which are able to use the factor in the method of the invention may be one or more defined groups of mobile stations operating within the system.

Each mobile station receiving the broadcast probability factor and authorised to make requests to access the resource may use the factor together with its measured apparent distance from the reference location in a calculation of a form pre-programmed in the mobile station. The calculation may be carried out by a control processor (e.g. digital signal processor) by use of a calculation algorithm stored in a memory of the mobile station, e.g. a memory associated with the processor, or by use of a look up table stored in such a memory giving, for a given broadcast probability value received, values of probability of the mobile station selecting a given access opportunity to make an access attempt are corresponding to different measured apparent distance values. The mobile station then uses the determined probability factor for a given access opportunity to decide whether it will select that opportunity to make an attempt for access in that opportunity.

The probability factor which is broadcast may be sent to mobile stations included in system control signalling. Desirably it is sent to mobile stations in advance of the opportunity that it represents. Thus, the control signalling message may include as well as the relevant probability factor an indicator of the opportunity to which it relates.

The invention is particularly suited for use in a system wherein the said resource comprises a data (text or short message service) communication channel to send data information but it is also suitable where the resource is another communication channel, e.g. for the communication of one or more signals comprising one or more of system control information, speech information, picture information or video information.

The reference location may be that of a fixed terminal of the system, e.g. of a base transmitter, e.g. in a base transceiver station, of the infrastructure of the system. Such a base transceiver station may be that currently serving the mobile station.

In the method of the invention, the access opportunities may be provided in given slots or sub-slots of a TDMA (time division multiple access) timing procedure. The given slots or sub-slots may be those allocated by the system infrastructure, e.g. a control processor in the infrastructure.

Alternatively, or in addition, the access opportunities may be provided in a plurality of neighbouring frequency bands, e.g. divided from a single allocated wider band.

In the method according to the invention, the apparent distance may be the distance from the location of a fixed transmitter corresponding to a given measured threshhold path loss (attenuation) of a signal from that transmitter.

This determination may be carried out by a measurement of the received strength of a signal from a fixed transmitter of known transmission power received by the mobile stations. This provides a measurement of path loss. Although in many cases the measurement of path loss will give an accurate measurement of distance from the fixed transmitter, the path loss does also depend on signal propagation conditions existing between the fixed transmitter and the receiving mobile station so the distance measured in this way is an apparent distance. However the measurement obtained is suitable to give an improvement in the overall probability distribution of mobile stations gaining access to the required resource.

Alternatively, another known relative distance measurement method may be used, e.g. by use of a GPS (Global Positioning System) receiver associated with each of the mobile stations, or by use of measured time or time difference of arrival of signals sent between the fixed transmitter and each of the mobile stations.

If the mobile station does select a given opportunity to make an attempt to request access to the resource in a that access opportunity, it may send a message to the infrastructure via its serving BTS in a known manner. This may sent as a short data message on a data channel. The message may identify the opportunity selected and the amount of information, e.g. data, required to be sent if the access request is granted.

According to the present invention in a second aspect there is provided a mobile communications system comprising an infrastructure and a pluality of mobile stations, the system being operable by the method according to the first aspect.

According to the present invention in a third aspect there is provided a system infrastructure apparatus including at least one base transceiver for use in a mobile communications system, the system infrastructure apparatus being operable:
(a) to send to mobile stations served by the base transceiver control signalling providing the mobile stations with random access opportunities to access a resource of the system;
(b) to broadcast to the served mobile stations a varying probability factor for each of the random access opportunities; the probability factor indicating the probability that a given served mobile station will for a given apparent distance from a reference location select a given random access opportunity to make an attempt for access to the resource.

According to the present invention in a fourth aspect there is provided a mobile station operable in the method according to the first aspect.

The present invention beneficially improves the overall probability distribution of mobile stations gaining access to the required resource. This is illustrated further in the embodiments described later. Although the distortion of randomisation of access provided by the invention will give an increase in the number of collisions between access attempts of different mobile stations, overall it will give an improvement in the overall probability distribution (or spread amongst mobile stations irrespective of their relative location) of mobile stations gaining access to the required resource. This is illustrated further in the embodiments described later.

Embodiments of the present invention will now be described by way of example with reference to the accompanying drawings, in which:

### BRIEF DESCRIPTION OF THE ACCOMPANYING DRAWINGS

FIG. 1 is a schematic block diagram of a cellular communication system.
FIG. 2 is a schematic block diagram of a mobile station used in the system shown in FIG. 1.
FIG. 3 is a graph of frequency versus time to illustrate random access opportunities available in both time and frequency space in control signalling in the system shown in FIG.1.
FIG. 4 is a graph showing for a given access opportunity a particular relationship between apparent distance versus access probability for mobile stations in the system shown in FIG. 1.
FIG. 5 is a graph showing for another given access opportunity a particular relationship between apparent distance versus access probability for mobile stations in the system shown in FIG. 1.

### DESCRIPTION OF EMBODIMENTS OF THE INVENTION

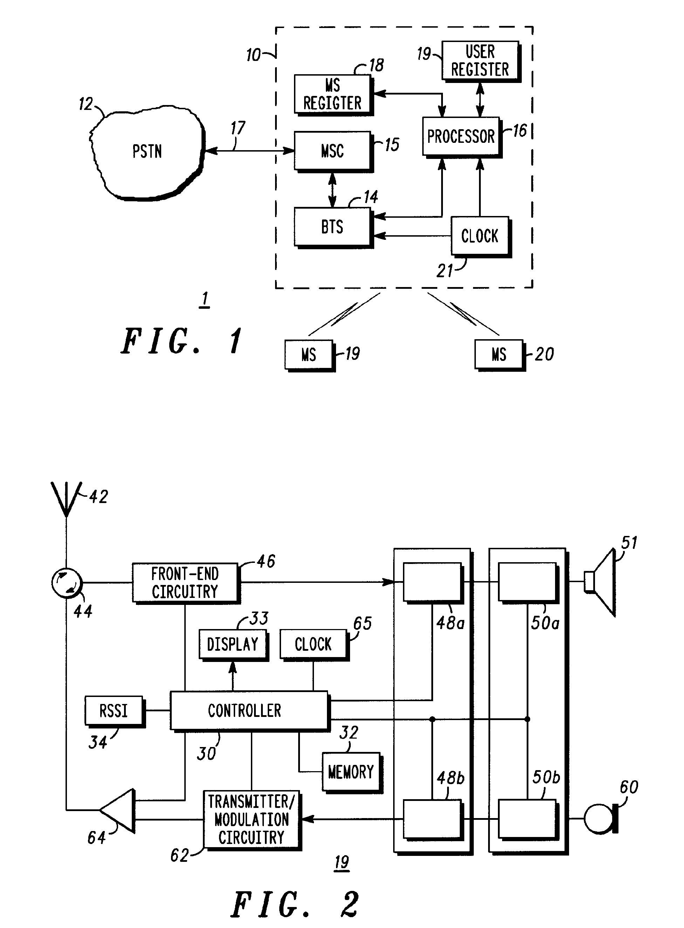

Referring to FIG. 1, there is shown schematically a mobile radio communication system 1 operating in accordance with TETRA standard protocols. The system 1 comprises a SwMI 10 and a plurality of MSs, two of which, MSs 19 and 20, are shown. The MSs 19, 20 in the system 1 can communicate directly with the SwMI 10 and with each other via the SwMI 10. Communications are sent to and received from the MSs 19, 20 by a BTS 14 serving the MSs 19, 20 and the control of such communications is by a processor 16. The BTS 14 and the processor 16 are sub-systems within the SwMI 10. Communications from the MSs 19 or 20 can also be sent via the BTS 14 to a MSC (master switch controller) 15 also incorporated in the SwMI 10. The MSC 15 is linked by a direct link (call control connection) 17 to a PSTN (public service telephone network) 12.

The BTS 14 routes calls to the processor 16 or to the MSC 15 depending on whether the call is directed to another MS in the system 1 or to a target terminal (not shown) to be reached via the PSTN 12. The SwMI 10 incorporates a MS register 18. This is operably coupled to the processor 16 and stores records of information about the location of MSs in the system 1 in a known manner.

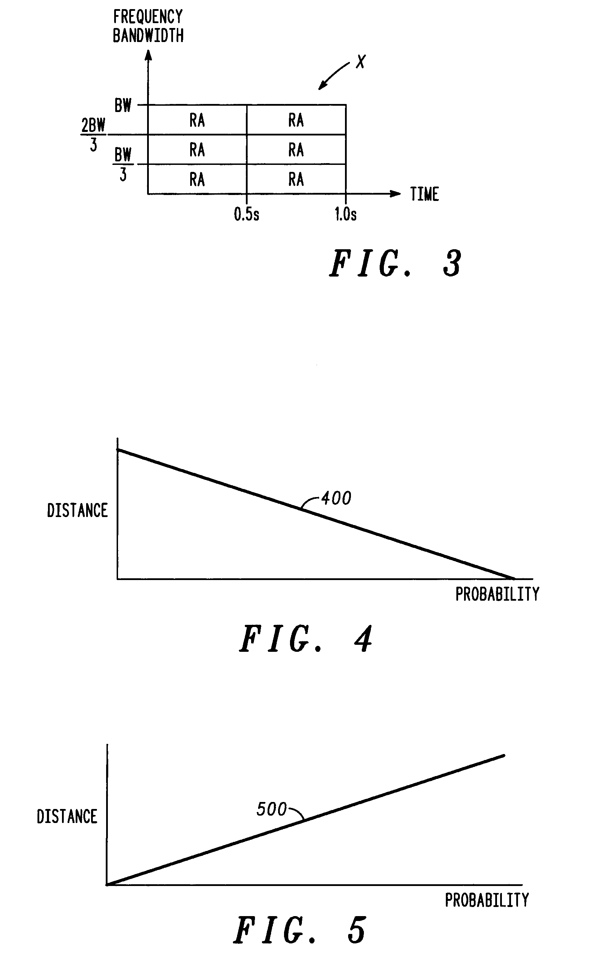

Referring now to FIG. 2, a block diagram of the MS 19 is shown. This illustrates the construction ad operation of the MSs being used in the system 1. Operation of functions within the MS 19 are controlled by a controller 30, which generally comprises a suitably programmed digital signal processor. The controller 30 may also control the information flow and operational state of processors within the MS 19.

Information relevant to operation of the MS 19 is stored in a memory 32 associated with the controller 30. For example, operational software programs to be used by the controller 30 and layer 2 ID address information to be used in communications sent by the MS 19 is stored in the memory 32.

The MS 19 has a receiver chain and a transmitter chain and includes an antenna 42 coupled to a duplex filter or circulator 44 that provides isolation between receiver and transmitter chains within the MS 19. The receiver chain includes a receiver front-end circuitry 46 (effectively providing reception, filtering and intermediate or baseband frequency conversion of incoming communications). The front-end circuitry 46 receives radio communications from another terminal, such as another MS, e.g. the MS 20 (FIG. 1). The front-end circuitry 46 is serially coupled to a signal processor (generally realised by a digital signal processor, DSP) 48a coupled to the controller 30. The signal processor 48a performs signal demodulation, error correction and formatting, and recovers end-to-end encrypted information from the received signal.

A signal representing the information recovered by the signal processor 48a is serially coupled to a baseband processing device 50a, which takes the information received from the processor 48a and formats it in a suitable manner to send to an output device 51, such as a speaker. Received or other information may also be displayed on an electro-optical display 33 coupled to the controller 30 (via display driver circuits -not shown).

The functions of the controller 30, the signal processor 48a and the baseband processor 50a although shown as separate in FIG. 2 may be implemented within the same physical microprocessor device.

The transmitter chain of the MS 19 essentially includes an input device 60, such as a microphone, coupled in series through a baseband processor 50b, a signal processor 48b, transmitter/modulation circuitry 62 and a power amplifier 64. The processor 48b, transmitter/modulation circuitry 62 and the power amplifier 64 are operationally responsive to the controller 30. An output from the power amplifier 64 is supplied to the duplex filter or circulator 44, as known in the art. The transmit chain in the MS 19 takes the baseband signal from input device 60 and delivers it to the signal processor 48b where it is encoded for transmission by the transmit/modulation circuitry 62 and power amplifier 64.

The signal processor 48b in the transmit chain may be implemented in a device distinct from the processor 48a in the receiver chain. Alternatively, a single processor 48 may be used to implement processing of both transmit and receive signals, as shown in FIG. 2. Similarly, the baseband processor 50a and the baseband processor 50b may be separate devices or may be combined in a single device 50 as shown in FIG. 2.

Of course, the various components within the MS 19 can be realised in discrete or integrated component form, with an ultimate structure therefore being a suitable design selection from these forms.

In use of the system 1 shown in FIG.1 including MSs such as the MS 19 of FIG. 2, the SWMI 10 and MSs 19, 20 etc operate according to TETRA protocols using a a synchronised TDMA timing procdure controlled by the processor 16 using the clock 21 for synchronisation. Time is divided into four slots per frame and 18 frames per multiframe (1 second). Using this protocol, system control communications are sent between the SwMI 10 (via the BTS 14) and the MSs 19, 20 etc. Such communications include messages relating to RA opportunities. The processor 16 defines certain slots at specified positions in the slot and frame structure of the TDMA structure in which such opportunities are to be available, e.g. in order for MSs to make a request to access a data communication channel.

The access opportunities for MSs in a given slot available for random access opportunities are illustrated in FIG. 3. This shows a slot X in both time and frequency space. The slot X is divided in time into two half slots in which opportunities are provided. Along the time axis these half slots extend from a time 0 to a time 0.5s and from the time 0.5s to a time 1.0s, where 1.0s is the length in time space of the slot X. The control channel in which the access request messages may be sent has a bandwidth BW which is equally divided into three narrower adjacent channels in each of which there are are access opportunities. These narrower channels extend in frequency bandwidth from 0 to BW/3, from BW/3 to 2BW/3 and from 2BW/3 to BW respectively, where BW is the overall channel bandwidth. Thus overall, in the slot X there are six access opportunities as indicated by six boxes labelled 'RA'.

The MSs receive in the control signalling from the processor 16 via the BTS 14 a message labelling each access opportunity in each given forthcoming time slot together with a probability factor associated with each such opportunity. The probability factor may be the same for all opportunities in a given slot or a given plurality of slots or may vary as between the different opportunities in the same slot. In general, however, there will be a variation in the probability factor applying to some slots compared with other slots so that there is a distortion of the reandomisation of access as described earlier.

The MSs 19 and 20 receive the control signalling and temporarily store the received probability values in the memory which for this purpose may include a shift register to store a sequence of values corresponding to a sequence of forthcoming opportunities.

The MSs 19, 20 etc are operable to determine their own apparent distance relative to the BTS 14. The determination is carried out by measuring the path loss of a known signal sent in control signalling from the BTS 14 and received by the MS. The BTS 14 sends in a broadcast signal the value of the power with which it transmits the signal. This value is received by the processor 48a of each MS and is stored in the memory 32 of each MS. The processor 48a also measures the power of the received signal. The MS can use this together with the stored value of the power of transmission at the BTS 14 to calculate the path loss by the controller 30.

The controller 30 refers to a look up table in the memory 32 for each received probability factor from the BTS 14. The controller 30 finds in the look up table a probability which corresponds to the calculated apparent path. This gives a probability which applies for the access opportunity in question. The controller 30 uses the probability to decide whether to select the opportunity to make an attempt to gain access to the data communication channel in the given opportunity. If it decides to make an attempt, it sends a short data standard message to the processor 16 via the BTS 14 giving details of the opportunity selected, the channel to which access is requested together with the amount of data waiting to be sent. The processor 16 decides according to a known algorithm which MS shall be given access to the data communication channel in the selected opportunity and the amount of data the MS will be able to send in a given transmission (if the data has to be broken into a plurality of packages). The processor 16 returns an acceptance message to the MS accordingly.

FIG.s 4 and 5 illustrate possible relationships between probability and distance (apparent measured distance). In the situation illustrated in FIG. 4, the broadcast probability factor is such as to indicate for a given RA opportunity that near MSs are to be more favoured than far MSs. In this case, the probability of the MS requesting random access is greatest the nearer the MS is to the transmitting BTS 14. Thus, the straight line 400 shows this relationship and the required probability is determined by the controller 30 of the MS 19 referring to the straight line 400 (which may be stored in the form of a look up table in the memory 32) to determine the probability value that corrsponds to the measured apparent distance.

In the situation illustrated in FIG. 5, the broadcast probability factor is such as to indicate for a given RA opportunity that far MSs are to be more favoured than far MSs. In this case, the probability of the MS requesting random access is greatest the further the MS is from the transmitting BTS 14. Thus, the straight line 500 shows this relationship and the required probability is determined by the controller 30 of the MS 19 referring to the straight line 500 (which may be stored in the form of a look up table in the memory 32) to determine the probability value that corresponds to the measured apparent distance.

In another embodiment of the invention (not shown) the relationship between probability value and apparent distance may be in the form of a curve of pre-defined form rather than a linear relationship.

## Claims

1. A method for sharing access to a resource in a mobile communication system by a plurality of mobile stations in the system, comprising the steps of:
(a) providing the mobile stations with access opportunities to access the resource;
(b) broadcasting by a base transmitter of the system to the mobile stations a probability factor for each of the opportunities;
(c) measuring by each of the mobile stations an apparent distance of the mobile station from a reference location in the system; and
(d) calculating by each of the mobile stations a probability for selecting an access opportunity using the broadcast probability factor received by the mobile station and the measurement made by the mobile station.

2. A method according to claim 1 wherein the probability factor is a number recognised by the mobile stations indicating how likely a mobile station is to select the opportunity based on a measured value of apparent distance of the mobile station from the reference location.

3. A method according to claim 1 or claim 2 wherein the mobile stations use the broadcast probability factor so as to offset the randomisation of the access to the resource by all mobile stations so that certain opportunities favour mobile stations apparently near to the reference location and certain other opportunities favour mobile stations favour mobile stations apparently far from the reference location, whereby the overall probability of mobile stations accessing the system resource is more uniformly spread across the mobile stations irrespective of the apparent location of the mobile stations.

4. A method according to claim 1, claim 2 or claim 3 wherein each mobile station which needs to request access to the resource receives the broadcast probability factor and uses the factor together with its measured apparent distance from the reference location to calculate in a manner pre-programmed in the mobile station a probability that the mobile station should select an access opportunity to request access to the resource in that access opportunity.

5. A method according to claim 4 wherein the calculation is carried out by use of a look up table stored in a memory of the mobile station giving values, for a given broadcast probability value received, corresponding to different measured apparent distance values of probability of the mobile station selecting an access opportunity to make an access attempt.

6. A method according to claim 4 or claim 5 wherein the mobile station uses the determined probability for a given access opportunity to decide whether it will make an attempt for access in that opportunity and, if it decides to make an attempt, sends to infrastructure of the system a request to access the resource in a given opportunity based on its attempt decision.

7. A method according to any one of the preceding claims wherein the probability factor which is broadcast to mobile stations is included in system control signalling.

8. A method according to any one of the preceding claims wherein the broadcast probability factor is sent to mobile stations in advance of the opportunity that it represents and is included in a control signalling message together with an indicator of the opportunity to which it relates.

9. A method according to any one of the preceding claims wherein the said resource comprises a data communication channel to send data information.

10. A method according to any one of the preceding claims wherein the reference location is that of a fixed terminal of the system.

11. A method according to claim 10 wherein the fixed terminal is that of a base transceiver station currently serving the mobile stations.

12. A method according to any one of the preceding claims wherein the access opportunities are provided in given slots or sub-slots of a TDMA (time division multiple access) timing procedure.

13. A method according to claim 12 wherein the given slots or sub-slots are allocated by a control processor in infrastructure of the system.

14. A method according to any one of the preceding claims wherein the access opportunities are provided in a plurality of neighbouring frequency bands.

15. A method according to any one of the preceding claims wherein the apparent distance is the distance from the location of a fixed transmitter corresponding to a given measured threshhold path loss of a signal from that transmitter and the determination of path loss is carried out by a measurement of the received strength of a signal from the fixed transmitter of known transmission power received by the mobile stations.

16. A method according to any one of claims 1 to 15 wherein the apparent distance measurement method includes use of GPS (Global Positioning System) receivers, each associated with one of the mobile stations, or measurement of time or time difference of arrival of signals sent between a fixed transmitter and each of the mobile stations.

17. A method according to any one of the preceding claims wherein the method is carried out in a system which operates in accordance with TETRA standard procedures.

18. A mobile communications system comprising an infrastructure and a pluality of mobile stations, the system being operable by the method according to any one of the preceding claims.

19. A system infrastructure apparatus including a base transceiver for use in a mobile communications system, the system infrastructure apparatus being operable:
(a) to send to mobile stations served by the base transceiver control signalling providing the mobile stations with random access opportunities to access a resource of the system;
(b) to broadcast to the served mobile stations a varying probability factor for each of the random access opportunities; the probability factor indicating the probability that a given served mobile station will for a given apparent distance from a reference location select a given access opportunity to make an attempt for access to the resource.

20. A mobile station operable in the method according to claim 1.
